# EUROPÄISCHE PATENTSCHRIFT

(11) **EP 3 127 202 B1**
(45) Veröffentlichungstag und Bekanntmachung des Hinweises auf die Patenterteilung: **28.02.2018**
(21) Anmeldenummer: 15719465.5
(22) Anmeldetag: 27.04.2015
(51) Int. Cl.: H02G 5/00

(54) **VORRICHTUNG ZUR LEITUNG ELEKTRISCHEN GLEICHSTROMS**
DEVICE FOR CONDUCTING ELECTRICAL DIRECT CURRENT
DISPOSITIF D'AMENÉE DE COURANT CONTINU ÉLECTRIQUE

(30) Priorität: 28.05.2014 EP 14170388
(43) Veröffentlichungstag der Anmeldung: 08.02.2017
(73) Patentinhaber: Siemens Aktiengesellschaft, 80333 München (DE)
(72) Erfinder: TORGERSEN, Haakon, N-7089 Heimdal (NO)
(86) Internationale Anmeldenummer: PCT/EP2015/059040
(87) Internationale Veröffentlichungsnummer: WO 2015/180906

(56) Entgegenhaltungen:
- DE-A1- 3 216 275
- FR-A- 1 543 660
- GB-A- 2 160 011
- US-A- 3 829 707
- DUCLUZAUX A: "Extra losses caused in high current conductors by skin and proximity effects", CAHIER TECHNIQUE - SCHNEIDER ELECTRIC, SCHNEIDER ELECTRIC, Nr. 83, 1. Januar 1983 (1983-01-01), Seiten 1-19, XP002585431,
- JOHN R ABBOTT: "High Frequency AC Harmonics on a HVDC Transmission Line Might Be Attenuated by Conductor Design", TRANSMISSION AND DISTRIBUTION, CLEWORTH PUBL., COS COB, US, 1. August 1969 (1969-08-01), Seiten 58-60, XP009126122, ISSN: 0041-1280

## Beschreibung

Die Erfindung betrifft eine Vorrichtung zur Leitung elektrischen Gleichstroms mit wenigstens einer Sammelschiene.
Unter einer Sammelschiene wird hier ein elektrischer Leiter zur Verteilung elektrischer Energie verstanden. Sammelschienen sind in der Regel aus Kupfer oder Aluminium gefertigt und elektrisch unisoliert ausgeführt.

Das Dokument US 3829707 offenbart eine Sammelschiene mit den Merkmalen des Oberbegriffs des Anspruchs 1. Der Erfindung liegt die Aufgabe zugrunde, eine verbesserte Vorrichtung zur Leitung elektrischen Gleichstroms mit wenigstens einer Sammelschiene anzugeben, die insbesondere zur Begrenzung elektrischer Kurzschlussströme geeignet ist.
Die Aufgabe wird erfindungsgemäß durch die Merkmale des Anspruchs 1 gelöst.
Vorteilhafte Ausgestaltungen der Erfindung sind Gegenstand der Unteransprüche.

Die Randelemente dienen dabei der Unterdrückung von sich mit hohen Frequenzen ändernden Stromanteilen. Dazu nutzt die Erfindung den Skin-Effekt in elektrischen Leitern, durch den sich hochfrequent ändernde elektrische Ströme innerhalb eines Leiters vornehmlich nahe den Außenoberflächen des Leiters geführt werden. Durch die erfindungsgemäße Anordnung von Randelementen an Außenoberflächen von Sammelschienen werden sich hochfrequent ändernde elektrische Ströme daher zu den Randelementen geführt und dort aufgrund der gegenüber den Sammelschienen geringeren elektrischen Leitfähigkeit der Randelemente unterdrückt. Dieser Effekt ermöglicht vorteilhaft insbesondere die Unterdrückung von Anteilen elektrischer Kurzschlussströme mit sich hochfrequent ändernden Stromstärken, die typisch in Gleichstromschaltungsanordnungen auftreten. Die Erfindung ermöglicht dadurch eine einfache und kostengünstige Reduzierung elektrischer Kurzschlussströme in Gleichstromsammelschienen. Die Erfindung sieht wenigstens zwei Randelemente vor, die an sich gegenüber liegenden seitlichen Außenoberflächen einer Sammelschiene angeordnet sind.
Dadurch lässt sich der Skin-Effekt noch besser nutzen und elektrische Kurzschlussströme können vorteilhaft noch weiter reduziert werden.
Eine weitere Ausgestaltung der Erfindung sieht mehrere stapelartig nebeneinander angeordnete Sammelschienen vor.
Diese Ausgestaltung ermöglicht es, neben dem Skin-Effekt auch den Proximity-Effekt zu nutzen, um sich hochfrequent ändernde elektrische Ströme in Randelemente zu verdrängen. Unter dem Proximity-Effekt versteht man dabei eine Stromverdrängung zwischen zwei benachbarten elektrischen Leitern unter dem Einfluss von Wechselströmen.
Bei der vorgenannten Ausgestaltung der Erfindung erstreckt sich vorzugsweise wenigstens ein Randelement über mehrere stapelartig nebeneinander angeordnete Sammelschienen, wobei es an seitlichen Außenoberflächen dieser Sammelschienen angeordnet und mit diesen Sammelschienen jeweils elektrisch leitfähig verbunden ist.

Dies vereinfacht die Konstruktion der erfindungsgemäßen Vorrichtung, da ein Randelement für mehrere Sammelschienen genutzt werden kann und somit die einzelnen Sammelschienen nicht separat mit Randelementen versehen werden müssen.

Eine weitere Ausgestaltung der Erfindung sieht wenigstens eine Sammelschiene aus Kupfer oder Aluminium vor.

Kupfer und Aluminium eignen sich aufgrund ihrer hohen elektrischen Leitfähigkeit besonders gut als Materialien für Sammelschienen.

Eine weitere Ausgestaltung der Erfindung sieht wenigstens ein Randelement aus Eisen oder einem Stahl, insbesondere aus einem nichtrostenden Stahl, vor.

Eisen und Stahl, insbesondere nichtrostender Stahl, eignen sich aufgrund ihrer geringen elektrischen Leitfähigkeit besonders gut als Materialien für Randelemente.

Eine weitere Ausgestaltung der Erfindung sieht wenigstens eine streifen- oder plattenförmig ausgebildete Sammelschiene vor.

Streifen- oder plattenförmig ausgebildete Sammelschienen ermöglichen vorteilhaft eine gute Wärmeabfuhr aus den Sammelschienen.

Die Erfindung sieht insbesondere die Verwendung einer erfindungsgemäßen Vorrichtung zur Begrenzung elektrischer Kurzschlussströme in einer elektrischen Schaltungsanordnung vor, wobei wenigstens eine Sammelschiene der Vorrichtung mit einem Pol einer elektrischen Gleichspannungsquelle elektrisch verbunden wird.

Diese Verwendung nutzt vorteilhaft die oben genannte Reduzierung elektrischer Kurzschlussströme einer erfindungsgemäßen Vorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen typischen Verlauf eines Kurzschlussstroms in einer Gleichstromschaltungsanordnung, und
- FIG 2: eine Querschnittsdarstellung einer erfindungsgemäßen Vorrichtung zur Leitung elektrischen Gleichstroms.

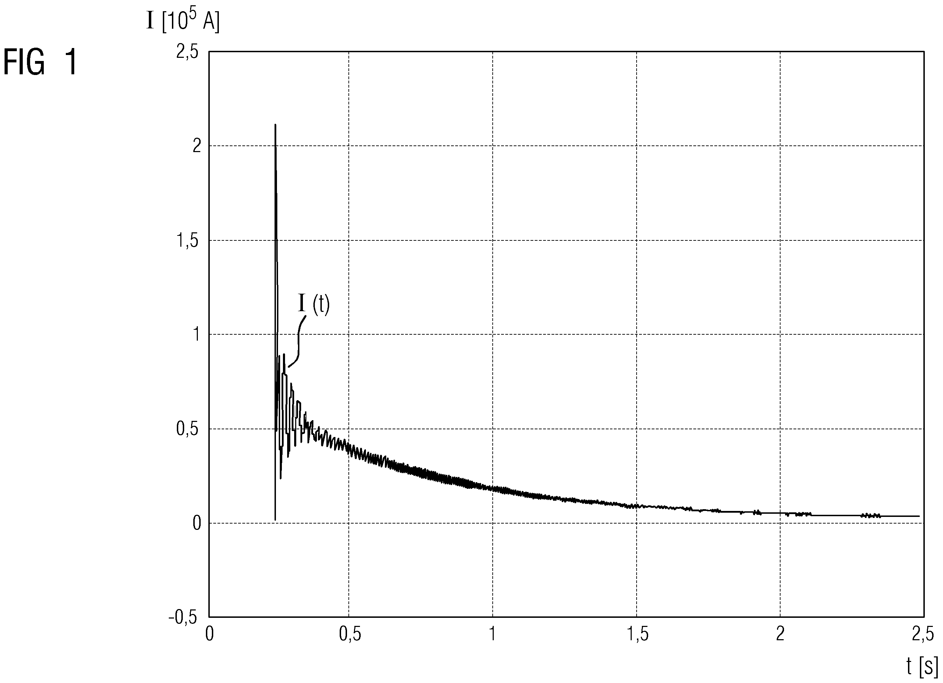

Figur 1 zeigt einen typischen Verlauf I(t) eines Kurzschlussstroms I in einer Gleichstromschaltungsanordnung in Abhängigkeit von einer Zeit t. Die Stromstärke des Kurzschlussstroms I ändert sich hochfrequent um einen zeitlich abnehmenden Mittelwert. Die hochfrequenten Änderungen des Kurzschlussstroms I können dabei durch verschiedene elektrische Bauelemente einer Gleichstromschaltungsanordnung, beispielsweise von Gleichrichtern oder Kondensatoren, verursacht und beeinflusst werden.

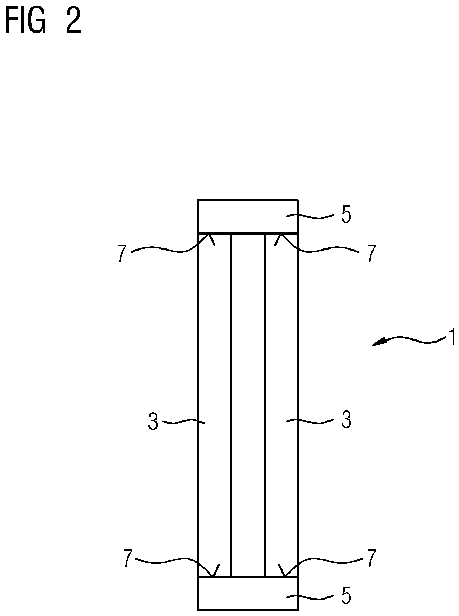

Figur 2 zeigt eine Querschnittsdarstellung einer erfindungsgemäßen Vorrichtung 1 zur Leitung elektrischen Gleichstroms. Die Vorrichtung 1 umfasst zwei Sammelschienen 3 und zwei Randelemente 5.

Die beiden Sammelschienen 3 sind gleichartig und jeweils streifenförmig mit einer rechteckigen Querschnittfläche ausgeführt und beispielsweise aus Kupfer oder Aluminium gefertigt. Die beiden Sammelschienen 3 sind stapelartig nebeneinander und parallel zueinander und voneinander beabstandet angeordnet.

Die beiden Randelemente 5 sind gleichartig und jeweils plattenartig mit einer rechteckigen Querschnittfläche ausgeführt und beispielsweise aus Eisen oder einem Stahl, insbesondere einem nichtrostenden Stahl, gefertigt.

Jedes Randelement 5 liegt an beiden Sammelschienen 3 an, wobei die Randelemente 5 an sich gegenüber liegenden Seiten der Sammelschienen 3 angeordnet sind. Dabei liegt jedes Randelement 5 flächig an einer seitlichen Außenoberfläche 7 jeder Sammelschiene 3 an und ist über diese seitlichen Außenoberflächen 7 mit beiden Sammelschienen 3 elektrisch leitend verbunden. Die beiden Randelemente 5 erstrecken sich jeweils orthogonal zur Zeichenebene der Figur 2 über die gesamte Länge der Sammelschienen 3.

Die Randelemente 5 sind beispielsweise durch die Sammelschienen 3 etwa zehnmal weiter voneinander beabstandet als die Sammelschienen 3 voneinander beabstandet sind. Die Dicken der Sammelschienen 3 und der Randelemente 5 entsprechen beispielsweise jeweils etwa dem Abstand der Sammelschienen 3 voneinander. Beispielsweise betragen die Dicken der Sammelschienen 3 und der Randelemente 5 und der Abstand der beiden Sammelschienen 3 voneinander jeweils etwa 10 mm und der Abstand der Randelemente 5 voneinander beträgt etwa 100 mm. Dabei wird unter der Dicke einer Sammelschiene 3 bzw. eines Randelements 5 jeweils die Länge einer der kürzeren Seiten der rechteckigen Kontur der Querschnittsfläche der Sammelschiene 3 bzw. des Randelements 5 verstanden.

In Gleichstromschaltungsanordnungen werden beispielsweise zwei in Figur 2 dargestellte Vorrichtungen 1 verwendet, wobei die Sammelschienen 3 einer dieser Vorrichtungen 1 mit einem Pol einer elektrischen Gleichspannungsquelle und die Sammelschienen 3 der anderen Vorrichtung 1 mit dem anderen Pol der elektrischen Gleichspannungsquelle elektrisch verbunden werden.

Durch den Skin-Effekt und den Proximity-Effekt werden sich hochfrequent ändernde elektrische Ströme aus den Sammelschienen 3 in die Randelemente 5 geführt und durch den hohen elektrischen Widerstand der Randelemente 5 unterdrückt. Simulationen haben ergeben, dass dadurch der elektrische Widerstand einer in Figur 2 dargestellten Vorrichtung 1 für sich hochfrequent ändernde elektrische Ströme um ein Vielfaches gegenüber dem elektrischen Widerstand der Sammelschienen 3 erhöht wird, beispielsweise um einen Faktor 39 für Stromänderungsfrequenzen von 1000 Hz bei Verwendung von Sammelschienen 3 aus Kupfer mit einer Querschnittsfläche von 2000 mm² und Randelementen 5 aus Eisen. Bei einem Kurzschlussstrom I mit einer Pulshöhe von 220 kA führt dies zu einem Spannungsabfall von etwa 75 V/m entlang einer Vorrichtung 1. Bei Verwendung von nichtrostendem Stahl anstelle von Eisen als Material der Randelemente 5 können der elektrische Widerstand einer Vorrichtung 1 für hochfrequente Stromänderungen und der Spannungsabfall entlang der Vorrichtung 1 weiter erhöht werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (1) zur Leitung elektrischen Gleichstroms, umfassend wenigstens eine Sammelschiene (3) und wenigstens ein an einer seitlichen Außenoberfläche (7) der Sammelschiene (3) angeordnetes und sich entlang der Sammelschiene (3) erstreckendes elektrisch leitfähiges Randelement (5), das mit der Sammelschiene (3) elektrisch leitfähig verbunden ist und eine geringere elektrische Leitfähigkeit als die Sammelschiene (3) aufweist,
**gekennzeichnet durch** wenigstens zwei Randelemente (5), die an sich gegenüber liegenden seitlichen Außenoberflächen (7) einer Sammelschiene (3) angeordnet sind.

2. Vorrichtung (1) nach Anspruch 1,
**gekennzeichnet durch** mehrere stapelartig nebeneinander angeordnete Sammelschienen (3).

3. Vorrichtung (1) nach Anspruch 2,
**gekennzeichnet durch** wenigstens ein Randelement (5), das sich über mehrere stapelartig nebeneinander angeordnete Sammelschienen (3) erstreckt, wobei es an seitlichen Außenoberflächen (7) dieser Sammelschienen (3) angeordnet und mit diesen Sammelschienen (3) jeweils elektrisch leitfähig verbunden ist.

4. Vorrichtung (1) nach einem der vorhergehenden Ansprüche,
**gekennzeichnet durch** wenigstens eine Sammelschiene (3) aus Kupfer oder Aluminium.

5. Vorrichtung (1) nach einem der vorhergehenden Ansprüche,
**gekennzeichnet durch** wenigstens ein Randelement (5) aus Eisen oder einem Stahl.

6. Vorrichtung (1) nach einem der vorhergehenden Ansprüche,
**gekennzeichnet durch** wenigstens ein Randelement (5) aus einem nichtrostenden Stahl.

7. Vorrichtung (1) nach einem der vorhergehenden Ansprüche,
**gekennzeichnet durch** wenigstens eine streifen- oder plattenförmig ausgebildete Sammelschiene (3).

8. Verwendung einer Vorrichtung (1) nach einem der vorhergehenden Ansprüche zur Begrenzung elektrischer Kurzschlussströme (I) in einer elektrischen Schaltungsanordnung, wobei wenigstens eine Sammelschiene (3) der Vorrichtung (1) mit einem Pol einer elektrischen Gleichspannungsquelle elektrisch verbunden wird.

## Claims

1. Device (1) for conducting electrical direct current, incorporating at least one bus bar (3) and, arranged on a lateral external surface (7) of the bus bar (3) and extending along the bus bar (3), at least one electrically conducting edge element (5) which has an electrically conducting bond to the bus bar (3) and has a lower electrical conductivity than the bus bar (3),
**characterised by** at least two edge elements (5) which are arranged on a bus bar (3) on lateral external surfaces (7) of it which lie opposite each other.

2. Device (1) according to claim 1,
**characterised by** several bus bars (3) which are arranged alongside each other in a stack-like manner.

3. Device (1) according to claim 2,
**characterised by** at least one edge element (5) which extends across several bus bars (3), arranged alongside each other in a stack-like manner, wherein it is arranged on lateral external surfaces (7) of these bus bars (3) and is bonded to each of these bus bars (3) in an electrically conducting manner.

4. Device (1) according to one of the preceding claims,
**characterised by** at least one bus bar (3) made of copper or aluminium.

5. Device (1) according to one of the preceding claims,
**characterised by** at least one edge element (5) made of iron or a steel.

6. Device (1) according to one of the preceding claims,
**characterised by** at least one edge element (5) made of a stainless steel.

7. Device (1) according to one of the preceding claims,
**characterised by** at least one bus bar (3) with a strip or plate-shaped construction.

8. Use of a device (1) in accordance with one of the preceding claims, for the limitation of electrical short-circuit currents (I) in an electrical circuit arrangement, wherein at least one bus bar (3) of the device (1) is electrically bonded to one pole of an electrical direct current source.

## Revendications

1. Dispositif (1) pour conduire du courant électrique continu, comprenant au moins une barre (3) collectrice et au moins un élément (5) de bord, conducteur de l'électricité, qui est disposé sur une surface (7) extérieure latérale de la barre (3) collectrice et s'étendant le long de la barre (3) collectrice, qui est relié d'une manière conductrice de l'électricité à la barre (3) collectrice et qui a une conductibilité électrique plus petite que la barre (3) collectrice,
**caractérisé par** au moins deux éléments (5) de bord, disposés sur des surfaces (7) extérieures latérales opposées d'une barre (3) collectrice.

2. Dispositif (1) suivant la revendication 1,
**caractérisé par** plusieurs barres (3) collectrices disposées les unes à côté des autres à la façon d'une pile.

3. Dispositif (1) suivant la revendication 2,
**caractérisé par** au moins un élément (5) de bord, qui s'étend sur plusieurs barres (3) collectrices, disposées les unes à côté des autres à la façon d'une pile, cet élément étant disposé sur des surfaces (7) extérieures latérales de ces barres (3) collectrices et étant relié d'une manière conductrice de l'électricité à ces barres (3) collectrices.

4. Dispositif (1) suivant l'une des revendications précédentes,
**caractérisé par** au moins une barre (3) collectrice en cuivre ou en aluminium.

5. Dispositif (1) suivant l'une des revendications précédentes,
**caractérisé par** au moins un élément (5) de bord en fer ou en acier.

6. Dispositif (1) suivant l'une des revendications précédentes,
**caractérisé par** au moins un élément (5) de bord en un acier inoxydable.

7. Dispositif (1) suivant l'une des revendications précédentes,
**caractérisé par** au moins une barre (3) collectrice en forme de bande ou de plaque.

8. Utilisation d'un dispositif (1) suivant l'une des revendications précédentes, pour limiter des courants (I) électriques de court-circuit dans un circuit électrique, dans lequel au moins une barre (3) collectrice du dispositif (1) est reliée électriquement à un pôle d'une source électrique de tension continue.
